**Europäisches Patentamt**

**European Patent Office**

**Office européen des brevets**

(19)

(11) Veröffentlichungsnummer : **0 416 146 B1**

## (12) EUROPÄISCHE PATENTSCHRIFT

(45) Veröffentlichungstag der Patentschrift :
**03.06.92 Patentblatt 92/23**

(51) Int. Cl.$^5$ : **B01D 17/038,** B01D 36/00

(21) Anmeldenummer : **89116446.9**

(22) Anmeldetag : **06.09.89**

(54) Vorrichtung zum Abtrennen von Feststoffteilchen und Fluiden höherer Dichte von Fluiden niederer Dichte.

(43) Veröffentlichungstag der Anmeldung :
**13.03.91 Patentblatt 91/11**

(45) Bekanntmachung des Hinweises auf die
Patenterteilung :
**03.06.92 Patentblatt 92/23**

(84) Benannte Vertragsstaaten :
**DE FR GB IT SE**

(56) Entgegenhaltungen :
**DE-A- 1 544 111**
**DE-B- 2 436 080**
**FR-A- 882 714**
**US-A- 4 298 465**

(73) Patentinhaber : **Lösing, Willibrord**
**Essener Strasse 108**
**W-4320 Hattingen 16 (DE)**

(72) Erfinder : **Lösing, Willibrord**
**Essener Strasse 108**
**W-4320 Hattingen 16 (DE)**

(74) Vertreter : **Masch, Karl Gerhard, Dr. Dipl.-Phys.**
**et al**
**Patentanwälte Andrejewski, Honke & Partner**
**Theaterplatz 3 Postfach 10 02 54**
**W-4300 Essen 1 (DE)**

## Beschreibung

Die Erfindung betrifft eine Vorrichtung zum Abtrennen von Feststoffteilchen und Fluiden höherer Dichte von Fluiden niederer Dichte, wobei ein Gehäuse aus mit Einlaßkanal und Auslaß versehenem Zentralteil, oberem Deckel und becherförmigem Unterteil eine Längskammer bildet, wobei im Unterteil ein Umlenkungsabscheider ausgebildet sowie im Zentralteil über dem Einlaßkanal ein Filtereinsatz angeordnet ist und wobei der Umlenkungsabscheider aus dem unteren Ende eines an den Einlaßkanal anschließenden Führungsrohres besteht, welches sich längs der Kammerachse mit Abstand vom Unterteil über einen Teil von dessen Höhe in das Unterteil hinein erstreckt und zusammen mit einem im Führungsrohr angeordneten Schraubenkörpereinsatz einen Drallströmungskanal mit unteren Fluidaustrittsöffnungen bildet. - Insbesondere ist eine Vorrichtung zum Abtrennen von Schmutzpartikeln und Wasser von Flüssigbrennstoffen, wie Benzin und Diesel- bzw. Heizöl, angesprochen.

Bei einer Vorrichtung der genannten Art (DE-C 24 36 080) wird die am unteren Ende des Führungsrohres von unten nach oben umgelenkte Flüssigkeit durch ein zusätzliches umgekehrtkonisches Einzelteil praktisch noch zweimal um jeweils 180 Grad umgelenkt, bevor es in den horizontal durchströmten Filtereinsatz zum Abscheiden der Schmutzpartikel gelangt. Bei dieser bekannten Vorrichtung hat sich als nachteilig herausgestellt, daß das Abscheiden der Fluide höherer Dichte begrenzt ist, weil diese Fluide bei größerem Anfall nicht mehr vollständig an den untersten Punkt des Gehäuseunterteils gelangen.

Der Erfindung liegt die Aufgabe zugrunde, eine Vorrichtung der eingangs genannten Art so weiter zu entwickeln, daß ein verbesserter Abscheidegrad erzielt wird.

Die Lösung dieser Aufgabe besteht gemäß der Erfindung darin, daß das Führungsrohr außen an seinem unteren Ende zwischen benachbarten Fluidaustrittsöffnungen jeweils einen in seiner Längstichtung bezogen auf eine Querschnittsebene des Führungsrohres liegend V-förmig geführten, aus einem oberen und einem unteren Schenkel bestehenden Abscheidungsrückführkanal aus zwei bis an die Wandung des Unterteils reichenden Stegwinkelansätzen aufweist.

Die Erfindung geht hierbei von der Beobachtung aus, daß bei der bekannten Vorrichtung die abzuscheidenden Fluide höherer Dichte bei größerem Anfall oberhalb der Fluidaustrittsöffnungen verbleiben und nicht in das Unterteil gelangen, vielmehr von dem Fluid niederer Dichte wieder mitgerissen werden. Um diesen Effekt zu beseitigen, ist bei der erfindungsgemäßen Vorrichtung am unteren Ende des Führungsrohres ein Teil des der nach oben strömenden Flüssigkeit zur Verfügung stehenden Ringraumes mit aus Stegwinkelansätzen gebildeten Kanälen besetzt, die so geformt sind, daß die von unten nach oben strömende Flüssigkeit nicht einströmen kann, vielmehr die sich oberhalb derselben ansammelnden Fluidanteile höherer Dichte im Gegenstrom nach unten zum Boden des Unterteils abführbar sind. Praktische Versuche haben gezeigt, daß mit der erfindungsgemäßen Vorrichtung bei gleicher Größe eine fast doppelte Abscheideleistung erreicht wird.

Für die weitere Ausgestaltung bestehen im Rahmen der Erfindung mehrere Möglichkeiten. So ist eine bevorzugte Ausführungsform dadurch gekennzeichnet, daß der jeweils untere V-Schenkel der Abscheidungsrückführkanäle eine in Richtung des Drallströmungskanals verlaufende Komponente aufweist; auf diese Weise wird erreicht, daß die aus den Fluidaustrittsöffnungen austretenden Teilströme nach Art einer Wasserstrahlpumpe auf die Abscheidungsrückführkanäle wirken und so den Ableitungseffekt für die Fluide höherer Dichte verstärken. In die gleiche Richtung gehen auch die Vorschläge, die Abscheidungsrückführkanäle an ihrem oberen Ende trichterförmig verbreitert auszubilden und/oder den Abscheidungsrückführkanälen eine von oben nach unten allmählich abnehmende Breite zu geben. Um bei längeren Führungsrohren auch die Drallströmung beim Aufwärtsströmen aufrechtzuerhalten, empfiehlt es sich, das Führungsrohr zwischen dem Einlaßkanal und den Abscheidungsrückführkanälen mit äußeren Schraubstegansätzen zu versehen.

Herstellungstechnisch besonders einfache Verhältnisse ergeben sich, wenn der Einlaßkanal von einem das Zentralteil durchsetzenden, an einem Ende verschlossenen bzw. verschließbaren Querrohr gebildet ist und dieses über Dachschrägen mit dem Führungsrohr verbunden ist; auf diese Weise können das Zentralteil und das Führungsrohr einstückig hergestellt werden; zudem ergibt sich die Möglichkeit, eine Zuleitung wahlweise an der einen Seite, an der gegenüberliegenden Seite oder an beiden gegenüberliegenden Seiten anzuschließen. Eine weitere wirkungstechnische Verbesserung ergibt sich, wenn das Zentralteil im Bereich bzw. in Höhe des Einlaßkanals eine horizontal umlaufende Innenauskehlung als Koaleszenzhilfe aufweist. Diese Innenauskehlung weist zweckmäßigerweise teilkreisförmigen bis teilelliptischen Querschnitt auf. In dieser Innenauskehlung finden nämlich die Fluidtröpfchen höherer Dichte gleichsam eine strömungsarme Bucht, in der sie sich mit anderen Fluidtröpfchen höherer Dichte zu größeren Tropfen vereinigen können, die aufgrund Schwerkraft dann wieder leichter in den Bereich der Abscheidungsrückführkanäle gelangen.

Eine weitere Verbesserung ergibt sich auch dadurch, daß man den Auslaß oberhalb des Filtereinsatzes am Zentralteil vorsieht. Der Filter wird dann von unten nach oben durchströmt und hängenbleibende Fluidtröpfchen höherer Dichte können dann immer noch in das Unterteil zurückgelangen; außerdem können letztere

EP 0 416 146 B1

zusammen mit Schmutzpartikeln durch eine später beschriebene Gegenspülung mit Hilfe einer im Deckel vorgesehenen Entlüftungsschraube in das Unterteil überführt werden. Bei der bekannten Vorrichtung ist alles das nicht möglich. Hinzu kommt, daß durch die beschriebene Ausbildung die Zahl der Umlenkungen erheblich reduziert ist, so daß die Vorrichtung dem Fluid einen erheblich geringeren Widerstand entgegensetzt. Herstellungstechnisch günstig ist wiederum die Maßnahme, dem Gehäuse bzw. der Längskammer im Bereich des Unterteils kreiszylindrischen und im Bereich des Zentralteils im wesentlichen rechteckigen, insbesondere quadratischen Querschnitt zu geben. Die kreiszylindrische Gestalt im Bereich des Unterteils empfiehlt sich aus strömungstechnischen Gründen. Der rechteckige bzw. quadratische Querschnitt im Zentralteil dagegen gibt dem Filtereinsatz einen besonders einfachen Aufbau; das ist schon deshalb wünschenwert, weil es sich bei dem Filtereinsatz um ein von Zeit zu Zeit zu wechselndes Bauteil handelt.

Im folgenden wird die Erfindung anhand einer ein Ausführungsbeispiel darstellenden Zeichnung näher erläutert. Es zeigen in schematischer Darstellung

Fig. 1 einen Längsschnitt durch eine Vorrichtung,
Fig. 2 einen Schnitt A-A durch den Gegenstand der Fig. 2,
Fig. 3 einen Schnitt B-B durch den Gegenstand der Fig. 1,
Fig. 4 eine Seitenansicht eines Details in Richtung des Pfeiles C in der Fig. 1 und
Fig. 5 den Gegenstand der Fig. 4 in Richtung des Pfeiles D gesehen.

Die in den Figuren dargestellte Vorrichtung dient zum Abtrennen von Feststoffteilchen und Fluiden höherer Dichte von Fluiden niederer Dichte, insbesondere von Schmutzpartikeln und Wasser von Flüssigbrennstoffen, wie Benzin und Diesel- bzw. Heizöl. Die Vorrichtung weist zunächst ein Gehäuse 1 auf, das aus einem Zentralteil 2, einem aufgeschraubten oberen Deckel 3 und einem angeschraubten becherförmigen Unterteil 4 aufgebaut ist und eine Längskammer 5 bildet. Im Unterteil 4 ist ein Umlenkungsabscheider 6 ausgebildet, während im Zentralteil 2, das mit einem Einlaßkanal 7 und einem Auslaß 8 versehen ist, über dem Einlaßkanal 7 ein Filtereinsatz 9 angeordnet ist.

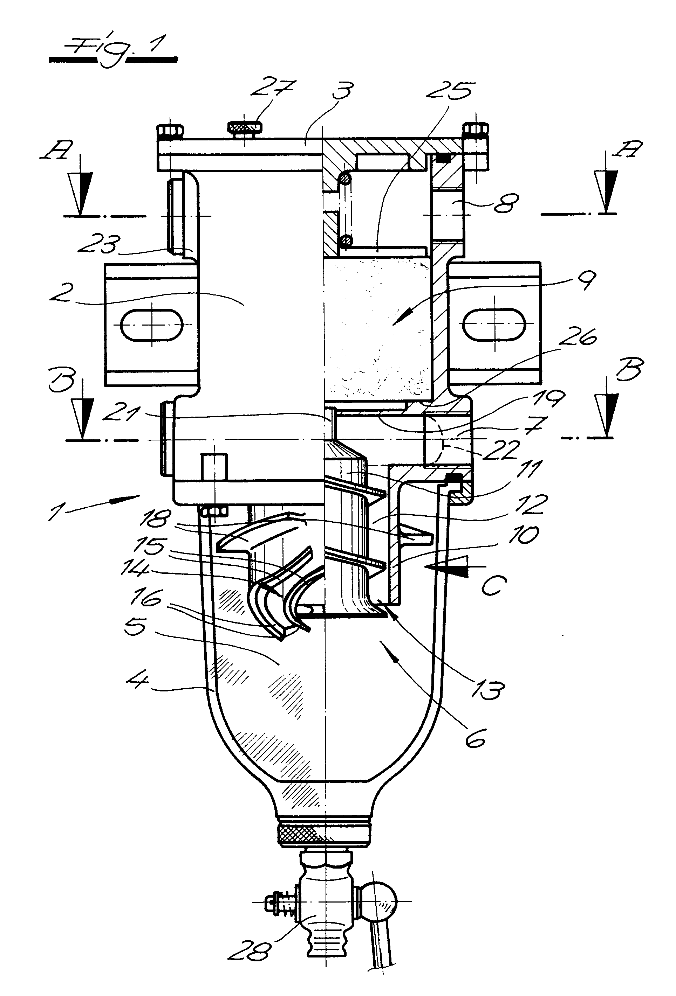

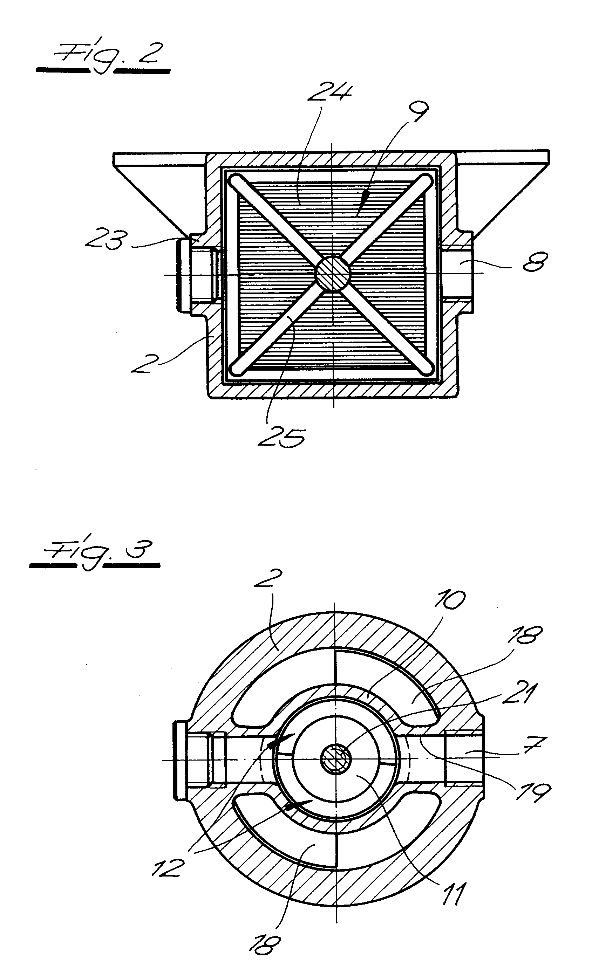

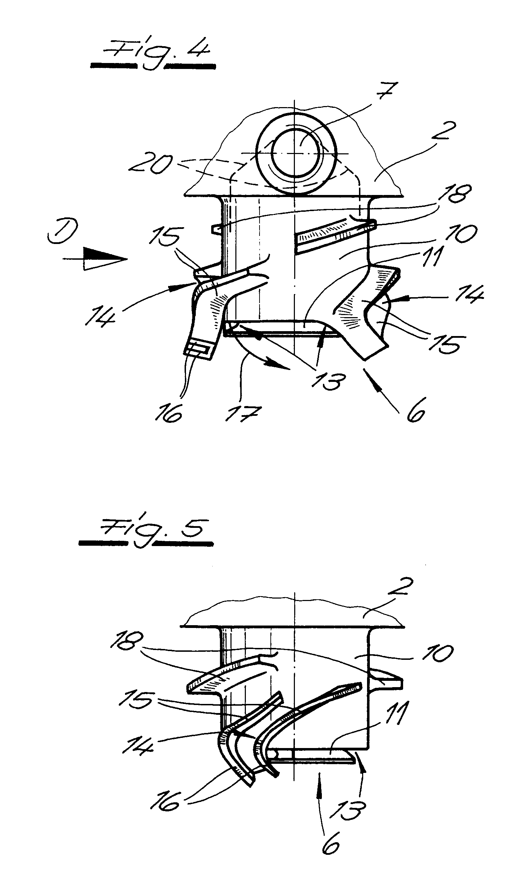

Der Umlenkungsabscheider 6 besteht aus dem unteren Ende eines an den Einlaßkanal 7 anschließenden Führungsrohres 10. Dieses Führungsrohr 10 erstreckt sich längs der Kammerachse mit Abstand vom Unterteil 4 über einen Teil von dessen Höhe in das Unterteil 4 hinein und bildet zusammen mit einem im Führungsrohr 10 angeordneten Schraubenkörpereinsatz 11 einen Drallströmungskanal 12 mit unteren Fluidaustrittsöffnungen 13. Wie man insbesondere aus den Fig. 1, 4 und 5 erkennt, sind bei dem dargestellten Ausführungsbeispiel zwei gegenüberliegende Fluidaustrittsöffnungen 13 verwirklicht. In denselben Figuren erkennt man auch, daß das Führungsrohr 10 an seinem unteren Ende zwischen diesen beiden benachbarten Fluidaustrittsöffnungen 13 jeweils einen äußeren, liegend V-förmig geführten Abscheidungsrückführkanal 14 aufweist. Jeder dieser beiden Abscheidungsrückführkanäle 14 ist aus zwei mit Abstand voneinander verlaufenden Stegwinkelansätzen 15 aufgebaut, die bis an die Wandung des Unterteils 4 reichen. Der jeweils untere V-Schenkel 16 der Abscheidungsrückführkanäle 14 weist eine in Richtung des Drallströmungskanals 12 verlaufende Komponente auf. Der Pfeil 17 verdeutlicht, daß die aus den Fluidaustrittsöffnungen 13 austretenden Teilströme einen Saugeffekt auf die Abscheidungsrückführkanäle 14 ausüben. Im übrigen zeigt die Fig. 4, daß die Abscheidungsrückführkanäle 14 an ihrem oberen Ende trichterförmig verbreitert sind und damit mehr oder weniger von oben nach unten allmählich abnehmende Breite aufweisen. Die Fig. 4 zeigt auch, daß das Führungsrohr 10 zwischen dem Einlaßkanal 7 und den Abscheidungsrückführkanälen 14 mit äußeren Schraubenstegansätzen 18 versehen ist, die ebenfalls bis an die Wandung des Unterteils 4 reichen.

Der Einlaßkanal 7 ist von einem das Zentralteil 2 durchsetzenden Querrohr 19 gebildet (vgl. Fig. 1/2). Dieses Querrohr 19 ist am einen Ende verschlossen bzw. verschließbar, so daß mehrere Möglichkeiten für eine im einzelnen nicht dargestellte Zufuhrleitung gegeben sind. Das Querrohr 19 ist außerdem über Dachschrägen 20 mit dem Führungsrohr 10 verbunden. Das Zentralteil 2 mit dem Querrohr 19 und dem Führungsrohr 10 bildet ein einziges Gußstück. Eine von oben in das Querrohr 19 zwischen den Dachschrägen 20 eingeschraubte Schraube 21 hält den Schraubenkörpereinsatz 11 im Führungsrohr 10.

Insbesondere Fig. 1 läßt deutlich kennen, daß das Zentralteil 2 im Bereich bzw. in Höhe des Einlaßkanals 7 eine horizontal umlaufende Innenauskehlung 22 mit teilkreisförmigem bis teilelliptischem Querschnitt als Koaleszenzhilfe aufweist.

Der Auslaß 8 ist oberhalb des Filtereinsatzes 9 am Zentralteil 2 vorgesehen, und zwar unmittelbar unterhalb des aufgeschraubten Deckels 3. Ebenso wie beim Einlaßkanal 7 kann auch hier die Anordnung so getroffen sein, daß auf der gegenüberliegenden Seite ein verschlossener oder verschließbarer Ansatz 23 für einen weiteren Auslaß vorgesehen ist. Das Gehäuse 1 bzw. die Längskammer 5 weisen im Bereich des Unterteils 4 kreiszylindrischen Querschnitt auf. Das Unterteil 4 selbst kann aus durchsichtigem Kunststoff, wie z. B. Polycarbonat, gefertigt sein; wenn sicherheitstechnische Belange es allerdings erfordern, wird man das Unterteil 4 ebenso wie den Rest aus Aluminium fertigen. Im Bereich des Zentralteils 2 weist das Gehäuse 1 bzw. die Längskammer 5 im wesentlichen rechteckigen, hier quadratischen Querschnitt auf. Auf diese Weise wird das

3

Filterelement besonders einfach. Die Falten 24 des aus Papier gefertigten Filtereinsatzes 9 liegen dann oben bzw. unten parallel bzw. senkrecht zu den Seiten des Zentralteils 2. Ansonsten ist der Aufbau des Filtereinsatzes 9 wie üblich. Der Filtereinsatz 9 wird über einen federnd am Deckel 3 befestigten Andruckstern 25 gegen einen entsprechenden Sitz 26 gedrückt, damit die Flüssigkeit nicht am Filtereinsatz 9 vorbeiströmen kann. Im Deckel 3 ist eine Entlüftungsschraube 27 vorgesehen, während das Unterteil 4 einen Ablaßhahn 28 aufweist.

Die Funktionsweise der beschriebenen Vorrichtung ergibt sich unschwer aus den Figuren: Die über den Einlaßkanal 7 einströmende Flüssigkeit fließt zwischen Führungsrohr 10 und Schraubenkörpereinsatz 11 nach unten, wobei ihr eine schraubenförmige Bewegung erteilt wird. Nach dem Austreten aus den Fluidaustrittsöffnungen 13 erfolgt eine Umlenkung um 180 Grad nach oben, wobei Fluidtröpfchen höherer Dichte nach unten absinken. Oberhalb der Fluidaustrittsöffnungen 13 sich an den Wandungen festsetzende Tröpfchen höherer Dichte koaleszieren und werden über die Abscheidungsrückführkanäle 14 ebenfalls nach unten in das Unterteil 4 überführt, wobei die aus den Fluidaustrittsöffnungen 13 austretenden Teilströme durch Saugwirkung diese Überführung unterstützen. Die Koaleszenzwirkung tritt auch im Bereich der Innenauskehlung 22 sowie der dem Unterteil 4 zugewandten Seite des Filtereinsatzes 9 auf . Im Filtereinsatz 9 werden schließlich die Schmutzpartikel festgehalten und die Flüssigkeit niederer Dichte strömt über den Auslaß 8 aus. Nach Unterbrechen des Flüssigkeitszulaufs werden durch Öffnen der Entlüftungsschraube 27 und des Ablaßhahns 28 die vom Filtereinsatz 9 festgehaltenen Schmutzpartikel und Fluidpartikel höherer Dichte im Zuge des Absinkens des Flüssigkeitsspiegels in das Unterteil 4 und von dort über den Ablaßhan 28 nach draußen befördert.

**Patentansprüche**

1. Vorrichtung zum Abtrennen von Feststoffteilchen und Fluiden höherer Dichte von Fluiden niederer Dichte, wobei ein Gehäuse (1) aus mit Einlaßkanal (7) und Auslaß (8) versehenem Zentralteil (2), oberem Deckel (3) und becherförmigem Unterteil (4) eine Längskammer (5) bildet, wobei im Unterteil (4) ein Umlenkungsabscheider (6) aus gebildet sowie im Zentralteil (2) über dem Einlaßkanal ein Filtereinsatz (9) angeordnet ist und wobei der Umlenkungsabscheider (6) aus dem unteren Ende eines an den Einlaßkanal (7) anschließenden Führungsrohres (10) besteht, welches sich längs der Kammerachse mit Abstand vom Unterteil (4) über einen Teil von dessen Höhe in das Unterteil (4) hinein erstreckt und zusammen mit einem im Führungsrohr (10) angeordneten Schraubenkörpereinsatz (11) einen Drallströmungskanal (12) mit unteren Fluidaustrittsöffnungen (13) bildet, **dadurch gekennzeichnet**, daß das Führungsrohr (10) außen an seinem unteren Ende zwischen benachbarten Fluidaustrittsöffnungen (13) jeweils einen in seiner Längsrichtung bezogen auf eine Querschnittsebene des Führungsrohres (10) liegend V-förmig geführten, aus einem oberen und einem unteren Schenkel bestehenden Abscheidungsrückführkanal (14) aus zwei bis an die Wandung des Unterteils (4) reichenden Stegwinkelansätzen (15) aufweist.

2. Vorrichtung nach Anspruch 1, dadurch gekennzeichnet, daß der jeweils untere V-Schenkel (16) der Abscheidungsrückführkanäle (14) eine in Richtung des Drallströmungskanals (12) verlaufende Komponente aufweist.

3. Vorrichtung nach Anspruch 1 oder 2, dadurch gekennzeichnet, daß die Abscheidungsrückführkanäle (14) an ihrem oberen Ende trichterförmig verbreitert sind.

4. Vorrichtung nach einem der Ansprüche 1 bis 3, dadurch gekennzeichnet, daß die Abscheidungsrückführkanäle (14) eine von oben nach unten allmählich abnehmende Breite aufweisen.

5. Vorrichtung nach einem der Ansprüche 1 bis 4, dadurch gekennzeichnet, daß das Führungsrohr (10) zwischen dem Einlaßkanal (7) und den Abscheidungsrückführkanälen (14) mit äußeren Schraubenstegansätzen (18) versehen ist.

6. Vorrichtung nach einem der Ansprüche 1 bis 5, dadurch gekennzeichnet, daß der Einlaßkanal (7) von einem das Zentralteil (2) durchsetzenden, an einem Ende verschlossenen bzw. verschließbaren Querrohr (19) gebildet ist und dieses über Dachschrägen (20) mit dem Führungsrohr (10) verbunden ist.

7. Vorrichtung nach einem der Ansprüche 1 bis 6, dadurch gekennzeichnet, daß das Zentralteil (2) im Bereich bzw. in Höhe des Einlaßkanals (7) eine horizontal umlaufende Innenauskehlung (22) als Koaleszenzhilfe aufweist.

8. Vorrichtung nach Anspruch 7, dadurch gekennzeichnet, daß die Innenauskehlung (22) einen teilkreisförmigen bis teilelliptischen Querschnitt aufweist.

9. Vorrichtung nach einem der Ansprüche 1 bis 8, dadurch gekennzeichnet, daß der Auslaß (8) oberhalb des Filtereinsatzes (9) am Zentralteil (2) vorgesehen ist.

10. Vorrichtung nach einem der Ansprüche 1 bis 9, dadurch gekennzeichnet, daß das Gehäuse (1) bzw. die Längskammer (5) im Bereich des Unterteils (4) kreiszylindrischen und im Bereich des Zentralteils (2) im wesentlichen rechteckigen, insbesondere quadratischen Querschnitt aufweist.

## Claims

1. A device for separating solid particles and fluids of higher density from fluids of lower density, wherein a housing (1) comprising a central part (2) provided with an inlet channel (7) and an outlet (8), an upper cover (3), and a bowl-shaped lower part (4) forms a longitudinal chamber (5), wherein a deflection separator (6) is formed in the lower part (4) and a filter element (9) is disposed in the central part (2) above the inlet channel and wherein the deflection separator (6) comprises a guide tube (10) attached to the lower end of the inlet channel (7), which guide tube extends into the lower part (4) over part of the latter's height along the axis of the chamber at a distance from the lower part (4), and which together with a spiralled body insert (11) disposed in the guide tube (10) forms a spiral flow channel (12) with lower fluid outlet openings (13), characterised in that the guide tube (10) has a V-shaped guided separation return channel (14) comprising an upper and a lower limb on the outside of its lower end between adjacent fluid outlet openings (13), each of which separation return channels lies in the longitudinal direction in relation to a cross-sectional plane of the guide tube (10) and comprises two angled web projections (15) extending to the wall of the lower part (4).

2. A device according to Claim 1, characterised in that each lower V-limb (16) of the separation return channels (14) has a component which runs in the direction of the spiral flow channel (12).

3. A device according to Claims 1 or 2, characterised in that the separation return channels (14) are widened into a funnel shape at their upper ends.

4. A device according to one of Claims 1 to 3, characterised in that the separation return channels (14) have a width which gradually decreases from top to bottom.

5. A device according to one of Claims 1 to 4, characterised in that the guide tube (10) is provided with external spiral web projections (18) between the inlet channel (7) and the separation return channels (14).

6. A device according to one of Claims 1 to 5, characterised in that the inlet channel (7) is formed from a transverse tube (19) which runs through the central part (2) and which is closed or which can be closed at one end, and the transverse tube is attached to the guide tube (10) via bevelled sections (20).

7. A device according to one of Claims 1 to 6, characterised in that the central part (2) has an internal groove (22) which runs horizontally around it as an aid to coalescence in the region of or at the level of the inlet channel (7).

8. A device according to Claim 7, characterised in that the internal groove (22) has a partially circular or an elliptical cross-section.

9. A device according to one of Claims 1 to 8, characterised in that the outlet (8) is provided on the central part (2) above the filter element (9).

10. A device according to one of Claims 1 to 9, characterised in that the housing (1) or the longitudinal chamber (5) has a cylindrical cross-section in the region of the lower part (4) and a substantially rectangular cross-section, particularly a square cross-section, in the region of the central part (2).

## Revendications

1. Dispositif pour séparer des particules de substances solides et de fluides à densité élevée, de fluides à densité plus faible, dans lequel un carter (1),constitué par une partie centrale (2) pourvue d'un canal d'admission (7) et d'une sortie (8), par un couvercle supérieur (3) et par une partie inférieure en forme de pot (4), forme une chambre longitudinale (5), et dans lequel un séparateur à renvoi (6) est formé dans la partie inférieure (4), et une cartouche filtrante (9) est disposée dans la partie centrale (2) au-dessus du canal d'admission, et dans lequel le séparateur à renvoi (6) est constitué par l'extrémité inférieure d'un tube de guidage (10) qui se raccorde au canal d'admission (7) et pénètre dans la partie inférieure (4) en s'étendant le long de l'axe de la chambre, à distance de la partie inférieure (4), sur une partie de la hauteur de cette dernière, et forme, conjointement avec un insert (11) formé d'un corps hélicoïdal et disposé dans le tube de guidage (10), un canal à écoulement tourbillonnaire (12) possédant des ouvertures inférieures (13) de sortie du fluide, caractérisé en ce que le tube de guidage (10) comporte extérieurement, au niveau de son extrémité inférieure, entre des ouvertures voisines (13) de sortie du fluide, respectivement un canal de renvoi de séparation (14), qui s'étend en forme de V, dont la direction longitudinale est horizontale par rapport à un plan de coupe transversale du tube de guidage (10) et qui est formé de deux éléments saillants en forme de barrettes coudées (15) qui s'étendent jusqu'à proximité la paroi de la partie inférieure (4).

2. Dispositif selon la revendication 1, caractérisé en ce qu'une partie de la branche inférieure respective (16) du V des canaux de renvoi de séparation (14) s'étend dans la direction du canal d'écoulement tourbillonnaire (12).

3. Dispositif selon la revendication 1 ou 2, caractérisé en ce que les canaux de renvoi de séparation (14)

5

s'élargissent en forme d'entonnoir au niveau de leur extrémité supérieure.

4. Dispositif selon l'une des revendications 1 à 3, caractérisé en ce que les canaux de renvoi de séparation (14) possèdent une largeur qui diminue progressivement de haut en bas.

5. Dispositif selon l'une des revendications 1 à 4, caractérisé en ce que le tube de guidage (10) comporte des éléments saillants extérieurs en forme de barrettes hélicoïdales (18), entre le canal d'admission (7) et les canaux de renvoi de séparation (14).

6. Dispositif selon l'une des revendications 1 à 5, caractérisé en ce que le canal d'admission (7) est formé par un tube transversal (19) qui est ou peut être fermé et que ce tube est raccordé au tube de guidage (10) par l'intermédiaire de versants obliques en forme de toit (20).

7. Dispositif selon l'une des revendications 1 à 6, caractérisé en ce que la partie centrale (2) possède, au voisinage ou au niveau du canal d'admission (7), une gorge intérieure périphérique horizontale (22) facilitant la coalescence.

8. Dispositif selon la revendication 7, caractérisé en ce que la gorge intérieure (22) possède une section transversale passant d'une forme partiellement circulaire à une forme partiellement elliptique.

9. Dispositif selon l'une des revendications 1 à 8, caractérisé en ce que la sortie (8) est prévue au-dessus de la cartouche filtrante (9), sur la partie centrale (2).

10. Dispositif selon l'une des revendications 1 à 9, caractérisé en ce que le carter (1) ou la chambre longitudinale (5) possède, au voisinage de la partie inférieure (4), une section transversale en forme de cylindre circulaire et, au voisinage de la partie centrale (2), une section transversale sensiblement rectangulaire et notamment carrée.

Fig. 1

_Fig. 2_

_Fig. 3_

Fig. 4

Fig. 5